# EUROPEAN PATENT APPLICATION

(11) **EP 2 645 661 A1**
(43) Date of publication of application: **02.10.2013**
(21) Application number: 11843317.6
(22) Date of filing: 07.03.2011
(51) Int. Cl.: H04L 29/06, H04N 21/6405

(54) **DATA SERVICE PROCESSING METHOD AND APPARATUS**

(30) Priority: 26.11.2010 CN 201010561641
(71) Applicant: ZTE Corporation, Shenzhen, Guangdong 518057 (CN)
(72) Inventor: WEI, Na, Shenzhen Guangdong 518057 (CN); WANG, Peng, Shenzhen Guangdong 518057 (CN); GAO, Dacheng, Shenzhen Guangdong 518057 (CN)
(74) Representative: D'Halleweyn, Nele Veerle Trees Gertrudis
(86) International application number: PCT/CN2011/071571
(87) International publication number: WO 2012/068799

(57) **Abstract**

A data service processing method and apparatus are provided in the present document, which relates to the filed of Internet and solves the problem of a low flexibility of data service processing. The method includes: a customer premise equipment receiving an address automatic acquisition request sent by a device within a local area network under the control of the customer premise equipment through any interface, wherein a key field of the address automatic acquisition request identifies a device type of the device; and the customer premise equipment processing the address automatic acquisition request according to the device type.

## Description

### Technical Field

The present document relates to the field of Internet, and particularly, to a data service processing method.

### Background of the Related Art

With various Digital Subscriber Lines (xDSL), Voice over Internet Protocol (VoIP) and Internet Protocol Television (IPTV) becoming the predominate technologies, a gateway access technology is also gradually upgraded. Especially, with respect to the home network technology, a home network is not only a network technology, more importantly, it is also a business and service; a digital home network must be connected to a telecommunication network and it even can be a part of end-to-end of the telecommunication network, and the home network can extend functions and applications of a public network to the home through a home gateway; and the home network can provide services such as integrated voices, data, multimedia, high quality audio/video and control and management and so on.

Most of the existing IPTV terminal schemes are based on interface binding, that is, IPTV services only can be completed through a specified interface of Customer Premise Equipment (CPE), a Set Top Box (STB) only can operate the IPTV services through a bound interface, both multicast and unicast operate through the same Wide Area Network (WAN) connection, but other services cannot be performed through the interface, which makes the flexibility of the CPE processing data services reduced.

### Summary of the Invention

The present document provides a data service processing method and apparatus, which solves the problem of a low flexibility of data service processing.

A data service processing method comprises:
a customer premise equipment receiving an address automatic acquisition request sent by a device within a local area network under the control of the customer premise equipment through any interface, wherein a key field of the address automatic acquisition request identifies a device type of the device; and
the customer premise equipment processing the address automatic acquisition request according to the device type.

Preferably, when the device is a Set Top Box (STB) device, the step of processing the address automatic acquisition request according to the device type comprises:
according to the key filed, determining that the device type is the STB device; and
forwarding the address automatic acquisition request to an address server of a wide area network side.

Preferably, after the step of forwarding the address automatic acquisition request to an address server of a wide area network side, the data service processing method further comprises:
the customer premise equipment receiving an address of an external network service server responded by the address server of the wide area network side, and forwarding the address of the external network service server to the STB device; and
the customer premise equipment receiving an IPTV service request sent by the STB device to the external network service server, and forwarding the IPTV service request to the external network service server via a network bridge of the customer premise equipment.

Preferably, when the device is a non-STB device, a step of responding to the address automatic acquisition request according to the device type comprises:
according to the key filed, determining that the device type is the non-STB device; and
the customer premise equipment responding with an internal network address of the non-STB device to the non-STB device.

Preferably, after the step of responding to the address automatic acquisition request according to the device type, the data service processing method further comprises:
the customer premise equipment receiving a multicast service request sent by the non-STB device, wherein a source address of the multicast service request is the internal network address;
the customer premise equipment converting the source address of the multicast service request into an external network address of the customer premise equipment, and routing the multicast service request to the external network service server;
the external network service server responding with acknowledgement message to the customer premise equipment; and
the customer premise equipment receiving multicast service data streams sent by the external network service server and forwarding the multicast service data streams to the device through the network bridge.

Preferably, after the step of responding to the address automatic acquisition request according to the device type, the data service processing method further comprises:
the customer premise equipment receiving a unicast service request sent by the non-STB device, wherein a destination address of the unicast service request is the internal network address;
the customer premise equipment converting a source address of the multicast service request into the external network address of the customer premise equipment, and routing the unicast service request to the external network service server according to static routing;
the external network service server responding with acknowledgement message to the customer premise equipment; and
the customer premise equipment receiving unicast service data streams sent by the external network service server and forwarding the unicast service data streams to the device according to the static routing.

The present document further provides a data service processing apparatus, which comprises:
a request receiving module, configured to: receive an address automatic acquisition request sent by a device within a local area network under the control of a customer premise equipment through any interface, wherein a key field of the address automatic acquisition request identifies a device type of the device; and
a request processing module, configured to: process the address automatic acquisition request according to the device type.

Preferably, the request processing module comprises:
a device type determination unit, configured to: according to the key filed, determine that the device type is a Set Top Box (STB) device;
a request forwarding unit, configured to: when the device type determination unit determines that the device type is the STB device, forward the address automatic acquisition request to an address server of a wide area network side.

Preferably, the request processing module further comprises a replying unit;
the device type determination unit is further configured to: according to the key filed, determine that the device type is a non-STB device;
the replying unit is configured to: when the device type determination unit determines that the device type is the non-STB device, respond with an internal network address corresponding to an external network service server requested by the non-STB device to the non-STB device.

Preferably, the data service processing apparatus further comprises a data forwarding module,
the data forwarding module is configured to: receive an address of the external network service server responded by the address server of the wide area network side, and forward the address of the external network service server to the STB device; and receive an IPTV service request sent by the STB device to the external network service server, and forward the IPTV service request to the external network service server via a network bridge.

Preferably, the data forwarding module is further configured to: receive a multicast service request sent by the non-STB device, wherein the multicast service request carries the internal network address of the non-STB device; convert a source address of the multicast service request into an external network address of the customer premise equipment, and route the multicast service request to the external network service server; and receive multicast service data streams sent by the external network service server and forward the multicast service data streams to the device through the network bridge.

Preferably, the data forwarding module is further configured to: receive a unicast service request sent by the non-STB device, wherein the unicast service request carries the internal network address of the non-STB device; convert a source address of the multicast service request into the external network address of the customer premise equipment, and route the unicast service request to the external network service server according to static routing; and receive unicast service data streams sent by the external network service server and forward the unicast service data streams to the device according to the static routing.

The present document further provides a customer premise equipment containing any of the above data service processing apparatus.

A data service processing method and apparatus are provided in the present document, a customer premise equipment receives an address automatic acquisition request sent by a device within a local area network under the control of the customer premise equipment through any interface, wherein a key field of the address automatic acquisition request identifies a device type of the device, and the customer premise equipment processes the address automatic acquisition request according to the device type, thus the limitation of IPTV services on the interface is removed, multiple data services can be processed through any interface of the customer premise equipment, and the problem of the low flexibility of data service processing is solved.

### Brief Description of Drawings

FIG. 1 is a flow diagram of a data service processing method provided by the example 1 of the present document.
FIG. 2 is a specific flow diagram of step a 102 in FIG. 2.
FIG. 3 is a flow diagram of a data service processing method provided by the example 2 of the present document.
FIG. 4 is a specific flow diagram of a step 302 in FIG. 3.
FIG. 5 is a flow diagram of a data service processing method provided by the example 3 of the present document.
FIG. 6 is a specific flow diagram of a step 502 in FIG. 5.
FIG. 7 is a schematic diagram of a structure of a data service processing apparatus provided by the example 4 of the present document.
FIG. 8 is a schematic diagram of a structure of a request processing module 702 in FIG. 7.
FIG. 9 is a schematic diagram of a structure of a data service processing apparatus provided by the example 5 of the present document.

### Preferred Embodiments of the Invention

The different operation environments of operators raise different requirements on processing of a home gateway with regard to IPTV services, in order to solve the problem that the flexibility is poor when the existing CPE processes data services and the requirements of different environments cannot be satisfied, the example of the present document provides a data service processing method and apparatus.

The examples of the present document will be described in detail in combination with the accompanying drawings below. It should be noted that the examples in the present document and the characteristics in the examples can be optionally combined with each other in the condition of no conflict.

In the examples of the present document, the CPE is a customer premise equipment, which is specifically a home gateway. Within a Local Area Network (LAN) under the control of the home gateway, there exist STB devices and non-STB devices.

Firstly, the example 1 of the present document is described.

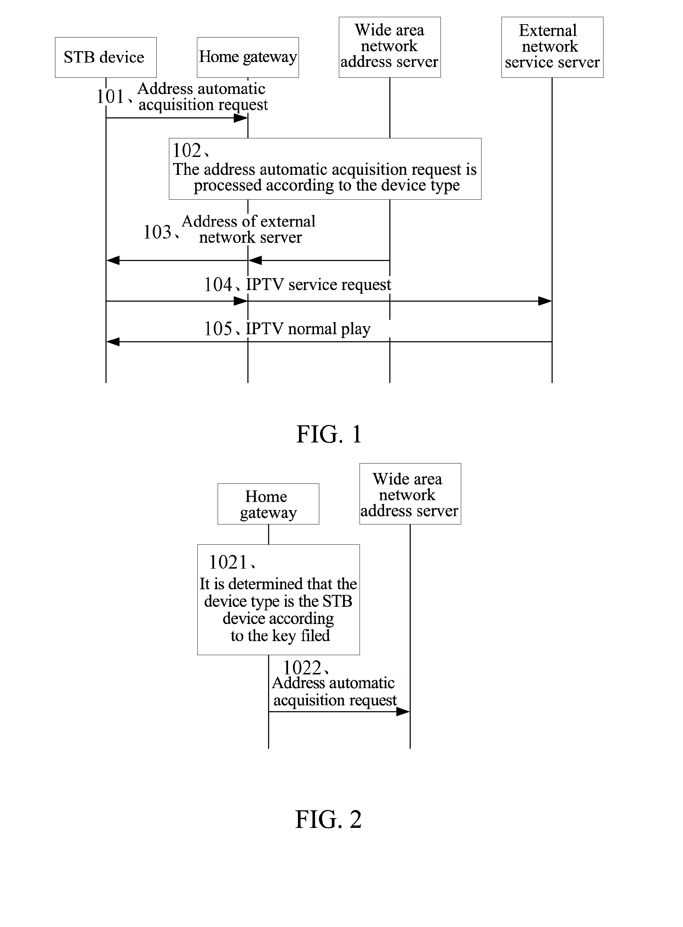

When an STB device sends an IPTV service request, a flow of a home gateway using the data processing method provided by the example of the present document to complete the processing is as shown in FIG. 1, and the following steps are included.

In step 101, a customer premise equipment receives an address automatic acquisition request sent by a device within a local area network under the customer premise equipment through any interface, wherein a key field of the address automatic acquisition request identifies a device type of the device;
in the step, an LAN side device of the home gateway initiates a Dynamic Host Configuration Protocol (DHCP) request, the LAN side device is the STB device, and the DHCP request is the address automatic acquisition request.

In step 102, the customer premise equipment processes the address automatic acquisition request according to the device type;
the step is specifically as shown in FIG. 2, and the following steps are included.

In step 1021, it is determined that the device type is the STB device according to the key filed;
in the step, the home gateway receives the DHCP message request sent from the LAN side at a BRO interface (an interface of the home gateway) and informs a forwarding module of the home gateway of the DHCP message request. The forwarding module of the home gateway determines that a type of the LAN side device is the STB device according to the key field (i.e. an OPTION 60 field) in the DHCP request.

In step 1022, the address automatic acquisition request is forwarded to an address server of a Wide Area Network (WAN) side;
in the step, the forwarding module of the home gateway forwards the DHCP request sent by the STB device of the LAN side to the address server of the WAN side through a network bridge.

In step 103, the customer premise equipment receives an address of an external network service server responded by the address server of the wide area network side, and forwards the address of the external network service server to the STB device;
in the step, the external network service server responds to the STB device after receiving the DHCP request, and the STB device receives the response, wherein an external network address of the external network service server is carried in the response.

In step 104, the customer premise equipment receives an IPTV service request sent by the STB device to the external network service server, and forwards the IPTV service request to the external network service server via the network bridge of the customer premise equipment;
in the step, the STB device initiates the IPTV service request (including two situations of unicast and multicast), and forwards the request to the external network service server via the network bridge of the home gateway.

In step 105, the external network service server sends a response with respect to the IPTV service request of the STB device and sends IPTV data streams to the STB device, and IPTV services are in normal operation.

The example 2 of the present document will be described below.

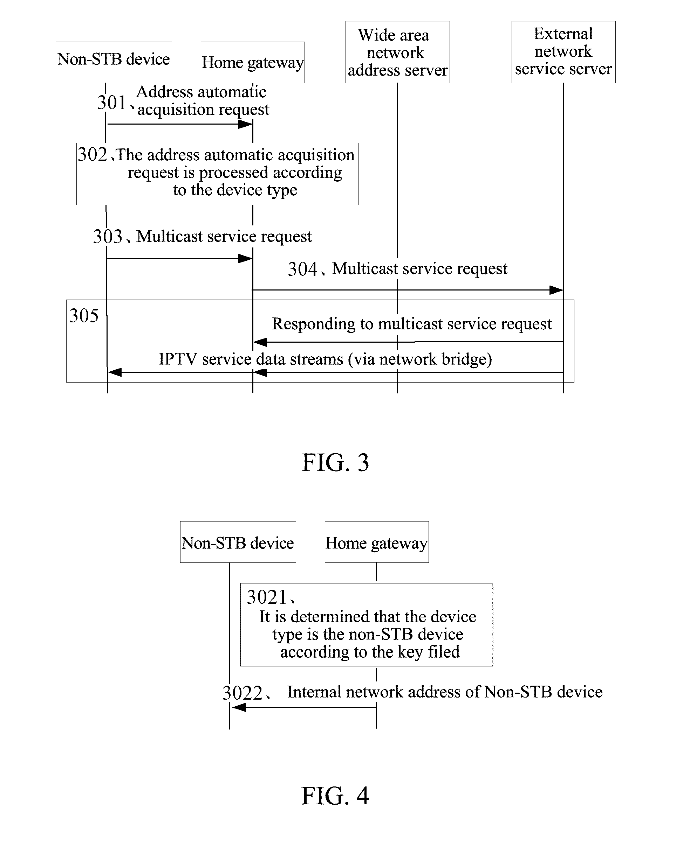

When a non-STB device sends an IPTV multicast service request, a flow of a home gateway using the data processing method provided by the example of the present document to complete the processing is as shown in FIG. 3, and the following steps are included.

In step 301, a customer premise equipment receives an address automatic acquisition request sent by a device within a local area network under the control of the customer premise equipment through any interface, wherein a key field of the address automatic acquisition request identifies a device type of the device;
in the step, an LAN side device of the home gateway initiates a DHCP request, the LAN side device is the non-STB device, and the DHCP request is the address automatic acquisition request.

In step 302, the customer premise equipment processes the address automatic acquisition request according to the device type;
the step is specifically as shown in FIG. 4, and the following steps are included.

In step 3021, it is determined that the device type is the non-STB device according to the key filed;
in the step, the home gateway receives the DHCP message request sent from the LAN side at a BRO interface (an interface of the home gateway) and informs a forwarding module of the home gateway of the DHCP message request. The forwarding module of the home gateway determines that a type of the LAN side device is the non-STB device according to the key field (i.e. an OPTION 60 field) in the DHCP request.

In step 3022, the customer premise equipment responds with an internal network address of the non-STB device to the non-STB device;
in the step, a DHCP server within the home gateway sends a response with respect to the DHCP request of the non-STB device, and the non-STB device receives the response, wherein the internal network address of the non-STB device is carried in the response; an available address field is set in the DHCP server, and the internal network address is an address within the address field.

In step 303, the customer premise equipment receives a multicast service request sent by the non-STB device, wherein an internal network address corresponding to an external network service server is carried in the multicast service request.

In step 304, the customer premise equipment converts a source address of the multicast service request into an external network address of the customer premise equipment, and routes the multicast service request to the external network service server;
in the step, the non-STB device initiates the IPTV (multicast) service request according to the internal network address, the source address of the request is the internal network address of the non-STB device when the request is initiated, the home gateway converts the source address of the request into an address of the home gateway after receiving the request, and after the conversion is completed, it forwards the request to a WAN side through the routing of the home gateway.

In step 305, the customer premise equipment receives multicast service data streams sent by the external network service server and forwards the multicast service data streams to the device through the network bridge;
in the step, the external network service server sends a response with respect to the IPTV (multicast) service request to the home gateway, so as to indicate the home gateway to prepare to receive the IPTV multicast service data streams.

Afterwards, the home gateway can forward the IPTV streams to the non-STB device of LAN side through the network bridge, and IPTV services are in normal operation.

The example 3 of the present document will be described below.

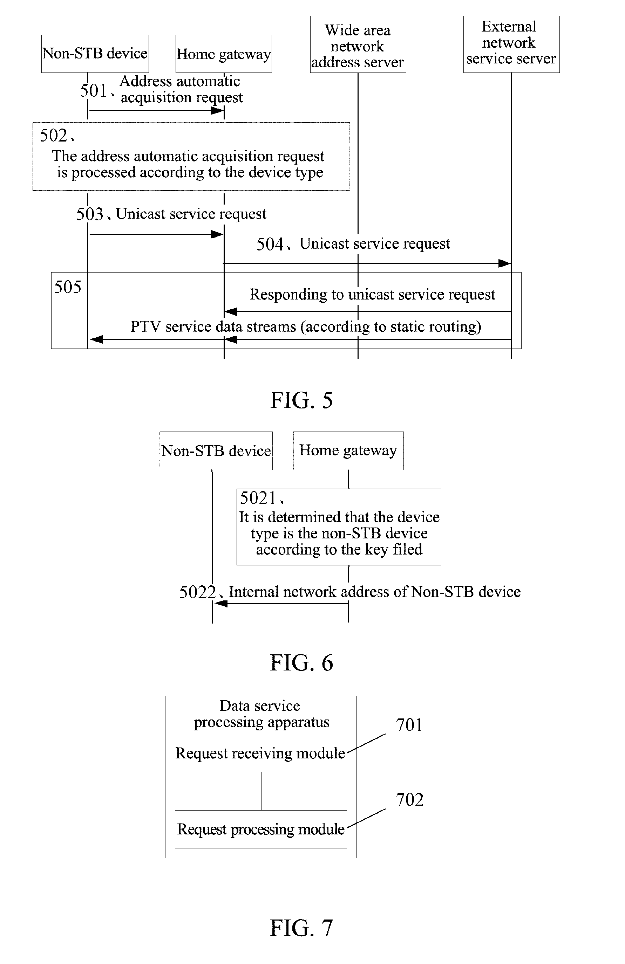

When a non-STB device sends an IPTV multicast service request, a flow of a home gateway using the data processing method provided by the example of the present document to complete the processing is as shown in FIG. 5, and the following steps are included.

In step 501, a customer premise equipment receives an address automatic acquisition request sent by a device within a local area network under the control of the customer premise equipment through any interface, wherein a key field of the address automatic acquisition request identifies a device type of the device;
in the step, an LAN side device of the home gateway initiates a DHCP request, the LAN side device is the non-STB device, and the DHCP request is the address automatic acquisition request.

In step 502, the customer premise equipment processes the address automatic acquisition request according to the device type;
the step is specifically as shown in FIG. 6, and the following steps are included.

In step 5021, it is determined that the device type is the non-STB device according to the key filed;
in the step, the home gateway receives the DHCP message request sent from the LAN side at a BRO interface (an interface of the home gateway) and informs a forwarding module of the home gateway of the DHCP message request. The forwarding module of the home gateway determines that a type of the LAN side device is the non-STB device according to the key field (i.e. an OPTION 60 field) in the DHCP request.

In step 5022, the customer premise equipment responds with an internal network address of the non-STB device to the non-STB device;
in the step, a DHCP server within the home gateway sends a response with respect to the DHCP request of the non-STB device, and the non-STB device receives the response, wherein the internal network address of the non-STB device is carried in the response. An available address field is set in the DHCP server, and the internal network address is an address within the address field.

In step 503, the customer premise equipment receives a unicast service request sent by the non-STB device, wherein an internal network address corresponding to an external network service server is carried in the unicast service request.

In step 504, the customer premise equipment converts a source address of a multicast service request into an external network address of the customer premise equipment, and routes the unicast service request to the external network service server according to static routing;
in the step, the non-STB device initiates the IPTV (unicast) service request according to the internal network address, the source address of the request is the internal network address of the non-STB device when the request is initiated, the home gateway converts the source address of the request into an address of the home gateway after receiving the request, and after the conversion is completed, it forwards the request to the external network service server of the WAN side through the static routing of the home gateway.

In step 505, the customer premise equipment receives unicast service data streams sent by the external network service server and forwards the unicast service data streams to the device according to the static routing;
in the step, the external network service server sends a response with respect to the IPTV (unicast) service request to the home gateway, so as to indicate the home gateway to prepare to receive the IPTV unicast service data streams.

Afterwards, the home gateway can forward the IPTV streams to the non-STB device of the LAN side according to the static routing, and IPTV services are in normal operation.

A data service processing method is provided in the present document, a customer premise equipment receives an address automatic acquisition request sent by a device within a local area network under the control of the customer premise equipment through any interface, wherein a key field of the address automatic acquisition request identifies a device type of the device, and the customer premise equipment processes the address automatic acquisition request according to the device type, thus the limitation of IPTV services on the interface is removed, multiple data services can be processed through any interface of the customer premise equipment, and the problem of the low flexibility of data service processing is solved.

A data service processing apparatus is also provided by the example 4 of the present document, and its structure is as shown in FIG. 7, which includes:
a request receiving module 701, configured to: receive an address automatic acquisition request sent by a device within a local area network under the control of a customer premise equipment through any interface, wherein a key field of the address automatic acquisition request identifies a device type of the device; and
a request processing module 702, configured to: process the address automatic acquisition request according to the device type.

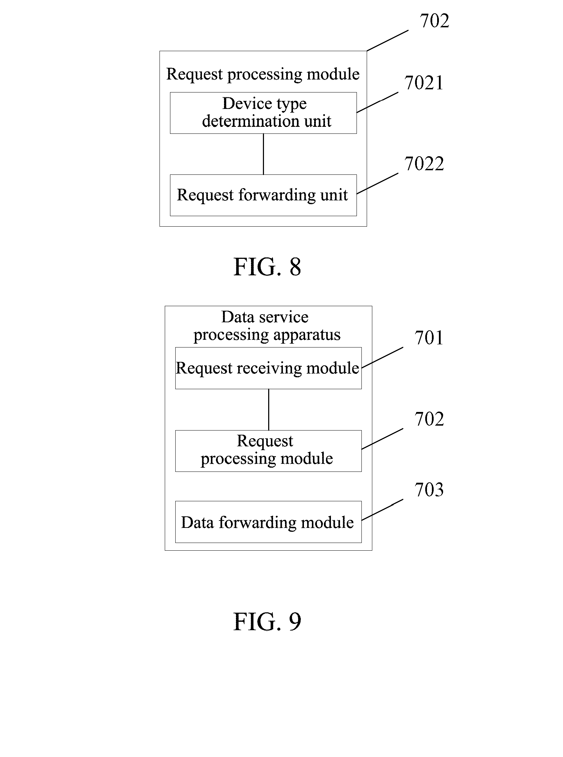

Specifically, a structure of the request processing module 702 is as shown in FIG. 8, which includes:
a device type determination unit 7021, configured to: according to the key filed, determine that the device type is an STB device;
a request forwarding unit 7022, configured to: when the device type determination unit 7021 determines that the device type is the STB device, forward the address automatic acquisition request to an address server of a wide area network side.

Preferably, the request processing module 702 also includes a replying unit 7023;
the device type determination unit 7021 is further configured to: according to the key filed, determine that the device type is a non-STB device;
the replying unit 7023 is configured to: when the device type determination unit 7021 determines that the device type is the non-STB device, respond with an internal network address of the non-STB device to the non-STB device.

A data service processing apparatus is also provided by the example 5 of the present document, based on the example 4 of the present document, the apparatus as shown in FIG. 9 also includes:
a data forwarding module 703, configured to: receive an address of an external network service server responded by the address server of the wide area network side, and forward the address of the external network service server to the STB device; and receive an IPTV service request sent by the STB device to the external network service server, and forward the IPTV service request to the external network service server via a network bridge.

Preferably, the data forwarding module 703 is further configured to: receive a multicast service request sent by the non-STB device, wherein the multicast service request carries an internal network address of the non-STB device; convert a source address of the multicast service request into an external network address of the customer premise equipment, and route the multicast service request to the external network service server; and receive multicast service data streams sent by the external network service server and forward the multicast service data streams to the device through the network bridge.

Preferably, the data forwarding module 703 is further configured to: receive a unicast service request sent by the non-STB device, wherein the unicast service request carries an internal network address of the non-STB device; convert a source address of the multicast service request into the external network address of the customer premise equipment, and route the unicast service request to the external network service server according to static routing; and receive unicast service data streams sent by the external network service server and forward the unicast service data streams to the device according to the static routing.

The above data service processing apparatus can be integrated in the CPE.

The above data service processing apparatus can be combined with a data service processing method provided by the example of the present document, a customer premise equipment receives an address automatic acquisition request sent by a device within a local area network under the control of the customer premise equipment through any interface, wherein a key field of the address automatic acquisition request identifies a device type of the device, and the customer premise equipment processes the address automatic acquisition request according to the device type, thus the limitation of IPTV services on the interface is removed, multiple data services can be processed through any interface of the customer premise equipment, and the problem of the low flexibility of data service processing is solved.

The ordinary person skilled in the art can understand that all or part of the steps in the above method can be implemented by using a flow of computer program, the computer program can be stored in a computer readable memory medium, the computer program is executed on a corresponding hardware platform (such as a system, a device, an apparatus and an component, etc.), and during the execution, one of the steps in the example of the method or a combination of the steps is included.

Alternatively, all or part of the steps of the above examples also can be implemented by using integrated circuits, these steps can be made into many integrated circuit modules respectively, or they can be implemented by making multiple modules or steps therein into a single integrated circuit module. Therefore, the present document is not limited to any combination of hardware and software in a specific form.

Each apparatus/function module/function unit in the above examples can be implemented by using universal calculating devices, they can be concentrated on a single calculating device, and also can be distributed in a network composed of multiple calculating devices.

When implemented in a form of software function module and sold or used as an independent production, each apparatus/function module/function unit in the above examples can be stored in a computer readable memory medium. The computer readable memory medium mentioned above can be a read-only memory, magnetic disk or optical disk and so on.

Changes and substitutions which can be easily conceived by any person skilled in the art within the technical scope disclosed by the present document shall all fall into the protection scope of the present document. Therefore, the protection scope of the present document should be subject to the protection scope described in the claims.

### Industrial Applicability

A data service processing method and apparatus are provided in the present document, a customer premise equipment receives an address automatic acquisition request sent by a device within a local area network under the control of the customer premise equipment through any interface, wherein a key field of the address automatic acquisition request identifies a device type of the device, and the customer premise equipment processes the address automatic acquisition request according to the device type, thus the limitation of IPTV services on the interface is removed, multiple data services can be processed through any interface of the customer premise equipment, and the problem of the low flexibility of data service processing is solved.

## Claims

1. A data service processing method, comprising:
a customer premise equipment receiving an address automatic acquisition request sent by a device within a local area network under control of the customer premise equipment through any interface, wherein a key field of the address automatic acquisition request identifies a device type of the device; and
the customer premise equipment processing the address automatic acquisition request according to the device type.

2. The data service processing method according to claim 1, wherein, when the device is a Set Top Box (STB) device, the step of processing the address automatic acquisition request according to the device type comprises:
according to the key filed, determining that the device type is the STB device; and
forwarding the address automatic acquisition request to an address server of a wide area network side.

3. The data service processing method according to claim 2, wherein, after the step of forwarding the address automatic acquisition request to an address server of a wide area network side, the data service processing method further comprises:
the customer premise equipment receiving an address of an external network service server responded by the address server of the wide area network side, and forwarding the address of the external network service server to the STB device; and
the customer premise equipment receiving an IPTV service request sent by the STB device to the external network service server, and forwarding the IPTV service request to the external network service server via a network bridge of the customer premise equipment.

4. The data service processing method according to claim 1, wherein, when the device is a non-STB device, a step of responding to the address automatic acquisition request according to the device type comprises:
according to the key filed, determining that the device type is the non-STB device; and
the customer premise equipment responding with an internal network address of the non-STB device to the non-STB device.

5. The data service processing method according to claim 4, wherein, after the step of responding to the address automatic acquisition request according to the device type, the data service processing method further comprises:
the customer premise equipment receiving a multicast service request sent by the non-STB device, wherein a source address of the multicast service request is the internal network address;
the customer premise equipment converting the source address of the multicast service request into an external network address of the customer premise equipment, and routing the multicast service request to the external network service server;
the external network service server responding with acknowledgement message to the customer premise equipment; and
the customer premise equipment receiving multicast service data streams sent by the external network service server and forwarding the multicast service data streams to the device through the network bridge.

6. The data service processing method according to claim 4, wherein, after the step of responding to the address automatic acquisition request according to the device type, the data service processing method further comprises:
the customer premise equipment receiving a unicast service request sent by the non-STB device, wherein a destination address of the unicast service request is the internal network address;
the customer premise equipment converting a source address of the multicast service request into the external network address of the customer premise equipment, and routing the unicast service request to the external network service server according to static routing;
the external network service server responding with acknowledgement message to the customer premise equipment; and
the customer premise equipment receiving unicast service data streams sent by the external network service server and forwarding the unicast service data streams to the device according to the static routing.

7. A data service processing apparatus, comprising:
a request receiving module, configured to: receive an address automatic acquisition request sent by a device within a local area network under control a customer premise equipment through any interface, wherein a key field of the address automatic acquisition request identifies a device type of the device; and
a request processing module, configured to: process the address automatic acquisition request according to the device type.

8. The data service processing apparatus according to claim 7, wherein, the request processing module comprises:
a device type determination unit, configured to: according to the key filed, determine that the device type is a Set Top Box (STB) device;
a request forwarding unit, configured to: when the device type determination unit determines that the device type is the STB device, forward the address automatic acquisition request to an address server of a wide area network side.

9. The data service processing apparatus according to claim 8, wherein, the request processing module further comprises a replying unit;
the device type determination unit is further configured to: according to the key filed, determine that the device type is a non-STB device;
the replying unit is configured to: when the device type determination unit determines that the device type is the non-STB device, respond with an internal network address corresponding to an external network service server requested by the non-STB device to the non-STB device.

10. The data service processing apparatus according to claim 9, further comprising a data forwarding module,
the data forwarding module is configured to: receive an address of the external network service server responded by the address server of the wide area network side, and forward the address of the external network service server to the STB device; and receive an IPTV service request sent by the STB device to the external network service server, and forward the IPTV service request to the external network service server via a network bridge.

11. The data service processing apparatus according to claim 10, wherein,
the data forwarding module is further configured to: receive a multicast service request sent by the non-STB device, wherein the multicast service request carries the internal network address of the non-STB device; convert a source address of the multicast service request into an external network address of the customer premise equipment, and route the multicast service request to the external network service server; and receive multicast service data streams sent by the external network service server and forward the multicast service data streams to the device through the network bridge.

12. The data service processing apparatus according to claim 10, wherein,
the data forwarding module is further configured to: receive a unicast service request sent by the non-STB device, wherein the unicast service request carries the internal network address of the non-STB device; convert a source address of the multicast service request into the external network address of the customer premise equipment, and route the unicast service request to the external network service server according to static routing; and receive unicast service data streams sent by the external network service server and forward the unicast service data streams to the device according to the static routing.

13. A customer premise equipment containing the data service processing apparatus according to any one of claims 7 to 12.
